# EUROPÄISCHE PATENTSCHRIFT

(11) **EP 2 722 550 B1**
(45) Veröffentlichungstag und Bekanntmachung des Hinweises auf die Patenterteilung: **19.08.2015**
(21) Anmeldenummer: 12007242.6
(22) Anmeldetag: 19.10.2012
(51) Int. Cl.: F16D 65/00

(54) **Verfahren und Reinigungsblech zum Reinigen einer Bremse einer Windenergieanlage**
Method and cleaning panel for cleaning a brake of a wind turbine
Procédé et feuille de nettoyage destinés à nettoyer le frein d'une éolienne

(43) Veröffentlichungstag der Anmeldung: 23.04.2014
(73) Patentinhaber: Nordex Energy GmbH, 22419 Hamburg (DE)
(72) Erfinder: Ocke-Philipp Hansen, 22761 Hamburg (DE)
(74) Vertreter: Hauck Patentanwaltspartnerschaft mbB

(56) Entgegenhaltungen:
- EP-A1- 1 825 162
- DE-A1- 10 336 984

## Beschreibung

Die vorliegende Erfindung betrifft ein Verfahren zum Reinigen einer Bremse einer Windenergieanlage sowie ein Reinigungsblech für eine Bremse einer Windenergieanlage.

Bei Windenergieanlagen, insbesondere bei deren Azimutantrieb tritt das Problem von quietschenden Bremsen auf. Das Quietschen der Bremse tritt erfahrungsgemäß bereits nach einer relativ kurzen Betriebsdauer der Bremse auf und wird verursacht durch Verschmutzungen auf den Bremsbelägen, die insbesondere durch einen metallischen Abrieb entstehen, der aufgrund des großen Bremsdrucks wieder in die Bremsbeläge eingearbeitet wird. Hierdurch entsteht eine sogenannte Verglasung auf den Bremsbelägen, die in Form von Plaques oder einer zusammenhängenden Fläche überwiegend aus Eisenoxidresten gebildet wird. Besonders häufig treten Quietschgeräusche in den Azimutbremsen auf, da die Windnachführung des Maschinenhauses bekanntermaßen häufig mit schleifenden Bremsen durchgeführt wird, um die Drehbewegung zu dämpfen.

Es ist bekannt, dass bei quietschenden Azimutbremsen die Bremsbeläge gereinigt werden müssen. Aufgrund der Einbauposition der Bremskaliber mit den Bremsbelägen müssen hierzu die Bremskaliber demontiert und so ein Zugang zu den Bremsbelägen geschaffen werden.

In dem Bereich der Kraftfahrzeugtechnik ist es für Scheibenbremsen an Kraftfahrzeugen aus DE 103 36 984 A1 bekannt geworden, für Scheibenbremsen eine Rückhaltevorrichtung mit mehreren Abstreifelementen vorzusehen, um den anfallenden Bremsstaub aufzufangen. Hierdurch soll eine Verschlechterung des optischen Eindrucks der Felge und die damit verbundene Wertminderung des Kraftfahrzeugs vermieden werden.

Aus DE 198 49 790 C2 ist ein Bremsbelag für eine Reibungsbremse eines Schienenfahrzeugs bekannt geworden, die einen in einer Nut angebrachten Abstreifer mit einer herausragenden Lamelle besitzt, um einen in beide Drehrichtungen wirksamen Abstreifer für einen Bremsabrieb vorzusehen.

Aus EP 1 825 162 ist ein Schmutzabstreifer für eine Scheibenbremse bekannt geworden, der über eine wärmeempfindliche Einrichtung bei niedrigen Temperaturen an der Bremsscheibe anliegt und bei höheren Temperaturen von der Bremsscheibe entfernt wird.

Der Erfindung liegt die Aufgabe zugrunde, ein Verfahren und eine Vorrichtung zum Reinigen einer Bremse einer Windenergieanlage bereitzustellen, die ohne großen Aufwand eine Reinigung der Bremsbeläge mit einfachen Mitteln gestatten.

Erfindungsgemäß wird die Aufgabe durch ein Verfahren mit den Merkmalen aus Anspruch 1 gelöst. Vorteilhafte Ausgestaltungen des Verfahrens bilden den Gegenstand der Unteransprüche.

Das erfindungsgemäße Verfahren dient zum Reinigen einer Bremse einer Windenergieanlage, insbesondere, um diese von einem Quietschen oder anderen störenden Geräuschen zu befreien. Die Bremse der Windenergieanlage besitzt eine Bremsscheibe und mindestens eine Bremseinrichtung, wobei Bremsscheibe und Bremseinrichtung relativ zueinander über einen Antrieb verdrehbar sind. Die Bremseinrichtung wird fachsprachlich auch als Bremskaliber bezeichnet. Das erfindungsgemäße Verfahren sieht vor, dass ein Reinigungsblech auf der Bremsscheibe befestigt wird. Vor oder nach Befestigen des Reinigungsblechs erfolgt ein mindestens teilweises Lüften der Bremseinrichtung, so dass der Bremsbelag der Bremseinrichtung nicht in Kontakt mit der Bremsscheibe steht. Über den Antrieb erfolgt eine Drehbewegung der Bremsscheibe und der Bremseinrichtung relativ zueinander derart, dass das Reinigungsblech an einem Bremsbelag der Bremseinrichtung anliegend vorbeibewegt wird. Das Reinigungsblech kann je nach Aufbau der Bremse durch eine Drehbewegung der Bremsscheibe und der Bremseinrichtung relativ zueinander durch die Bremseinrichtung bewegt werden. In einem nachfolgenden Schritt erfolgt ein Demontieren des Reinigungsblechs von der Bremsscheibe. Das erfindungsgemäße Verfahren zeichnet sich besonders dadurch aus, dass das Reinigungsblech lediglich temporär an der Bremsscheibe befestigt wird und nach einem Reinigen des Bremsbelages wieder von der Bremsscheibe entfernt werden kann. Eine Demontage der Bremseinrichtung und ein Ausbau der Bremsbeläge sind hierfür nicht erforderlich. Die Stillstandszeiten der Windenergieanlage für ein Reinigen der Bremse werden mit dem erfindungsgemäßen Verfahren ganz wesentlich verkürzt.

Bevorzugt wird bei dem erfindungsgemäßen Verfahren vor dem Demontieren des Reinigungsbleches dieses mehrfach an dem Bremsbelag der Bremseinrichtung vorbeibewegt. Das Vorbeibewegen kann hierbei aus unterschiedlichen Richtungen oder wiederholt aus derselben Richtung erfolgen.

In einer bevorzugten Ausgestaltung wird sichergestellt, dass bei der Relativbewegung des Bremsbelages und des Reinigungsbleches zueinander ein vorbestimmter Anpressdruck erzielt wird. Der Anpressdruck kann auf unterschiedliche Weise eingestellt werden. Beispielsweise kann ein definierter Anpressdruck erzielt werden, indem die Bremseinrichtung nur teilweise gelüftet wird. Eine andere, auch zusätzlich einzusetzende Möglichkeit, einen vorbestimmten Anpressdruck bei der Vorbeibewegung relativ zueinander sicherzustellen, besteht darin, die Dicke des Reinigungsbleches geeignet zu wählen.

In einer besonders bevorzugten Ausgestaltung wird das Reinigungsblech mit Ausnehmungen und/oder Vorsprüngen ausgestattet. Die Ausnehmungen und/oder Vorsprünge schaben bei der Relativbewegung entlang dem Bremsbelag, so dass eine sich insbesondere durch Abrieb auf dem Bremsbelag gebildete Schicht abgeschabt wird. Hierbei erfolgt die Schabbewegung durch die an den Ausnehmungen in dem Reinigungsblech vorgesehenen Kanten und/oder an den auf dem Reinigungsblech ausgebildeten Vorsprüngen. Bei dem Schabvorgang wird nach Möglichkeit kein Material des Bremsbelages selbst abgenommen, sondern lediglich eine auf dem Bremsbelag ausgebildete Schicht entfernt. Der Vorgang kann als ein Abschaben oder ein Abziehen der Oberfläche des Bremsbelages verstanden werden.

Die erfindungsgemäße Aufgabe wird ebenfalls durch ein Reinigungsblech für eine Bremse einer Windenergieanlage mit den Merkmalen aus Anspruch 5 gelöst.

Das erfindungsgemäße Reinigungsblech weist Mittel zur Befestigung des Reinigungsbleches an der Bremsscheibe auf. Ferner wird die Dicke des Reinigungsbleches derart gewählt, dass das auf der Bremsscheibe befestigte Reinigungsblech mit der Bremsscheibe durch die Bremseinrichtung hindurch bewegbar ist, wobei das Reinigungsblech an dem Bremsbelag der Bremseinrichtung anliegt. Das erfindungsgemäße Reinigungsblech kann nach dem erfindungsgemäßen Verfahren zum Reinigen des Bremsbelages eingesetzt werden, wobei durch die Bewegung des Reinigungsbleches an dem Bremsbelag entlang eine auf dem Bremsbelag entstandene Schicht abgeschabt oder abgezogen wird, wodurch ein Quietschen zwischen Bremsbelag und Bremsscheibe nachfolgend vermieden wird.

In einer bevorzugten Ausgestaltung besitzt das Reinigungsblech mindestens eine Ausnehmung und/oder einen Vorsprung, die bei einer Relativbewegung zwischen Reinigungsblech und Bremsbelag entlang dem Bremsbelag schaben. Die Schabwirkung entsteht hierbei im Wesentlichen durch Kanten der Ausnehmung und/oder die auf dem Reinigungsblech vorgesehenen Vorsprünge, wobei hier nicht zwingend definierte Schneiden oder Schnittkanten vorgesehen sein müssen, sondern bereits einfache Kanten in den Ausnehmungen oder an den Vorsprüngen ausreichen, wie sie durch ein Stanzen oder Schneiden in dem Reinigungsblech entstehen.

In einer bevorzugten Weiterbildung ist eine Vielzahl von Ausnehmungen vorgesehen, von denen mindestens eine einen Vorsprung aufweist, der bei der Relativbewegung entlang dem Bremsbelag schabt. Der Vorsprung muss hierbei nicht notwendigerweise scharfkantig ausgebildet sein, sondern kann in einer geringen Höhe aus dem Reinigungsblech vorstehen und beispielsweise aus einer Auffaltung bestehen.

In einer weiteren bevorzugten Ausgestaltung weist das Reinigungsblech entlang einer Kante, die bei einer Relativbewegung zwischen Bremseinrichtung und Reinigungsblech zuerst in die Bremseinrichtung eintritt, eine Abschrägung auf. Die Abschrägung, beispielsweise in Form einer Fase, erlaubt es, dass das Reinigungsblech ohne Kontakt mit der Bremseinrichtung in diese eintritt und der Bremsbelag sich auf das Reinigungsblech aufschiebt. In der Regel sind die Bremsbeläge in der Bremseinrichtung bei einer ganz oder teilweise gelüfteten Bremse federnd gelagert, so dass der Bremsbelag sich auf das Reinigungsblech aufschieben kann und unter Druck auf diesem aufliegt.

In einer bevorzugten Ausgestaltung ist das Reinigungsblech als U-Form ausgebildet, deren Schenkel parallel zueinander angeordnet sind. Die Schenkel des U-förmigen Reinigungsbleches liegen im montierten Zustand flächig auf der Bremsscheibe auf und erhöhen deren Dicke somit im Wesentlichen jeweils um die Dicke des Reinigungsbleches.

Bevorzugt wird das erfindungsgemäße Reinigungsblech bei einer Windenergieanlage eingesetzt. Das Reinigungsblech besitzt dabei Bohrungen, die zur Befestigung an der Bremsscheibe oder an einem an der Bremsscheibe ausgebildeten Befestigungsabschnitt dienen.

In einer bevorzugten Ausgestaltung liegt das Reinigungsblech an der Bremsscheibe der Windenergieanlage an und wird mit dieser durch die Bremseinrichtung geführt.

Bevorzugt handelt es sich bei der Bremseinrichtung um eine Azimutbremse, mit der eine Drehbewegung zwischen Maschinenhaus und Turm gebremst wird.

Eine bevorzugte Ausgestaltung der Erfindung wird nachfolgend näher erläutert. Es zeigen:
- Fig. 1: einen Ausschnitt einer kreisförmigen Bremsscheibe mit einem aufgesetzten Reinigungsblech,
- Fig. 2: einen Schnitt entlang der Linie II-II aus Fig. 1,
- Fig. 3: eine Detailansicht des Reinigungsbleches,
- Fig. 4: eine perspektivische Ansicht des U-förmigen Reinigungsbleches,
- Fig. 5: eine Ansicht des U-förmigen Reinigungsbleches von der Seite,
- Fig. 6: eine Detailansicht einer Aussparung in dem Reinigungsblech und
- Fig. 7: eine Detailansicht einer alternativen Aussparung am Reinigungsblech.

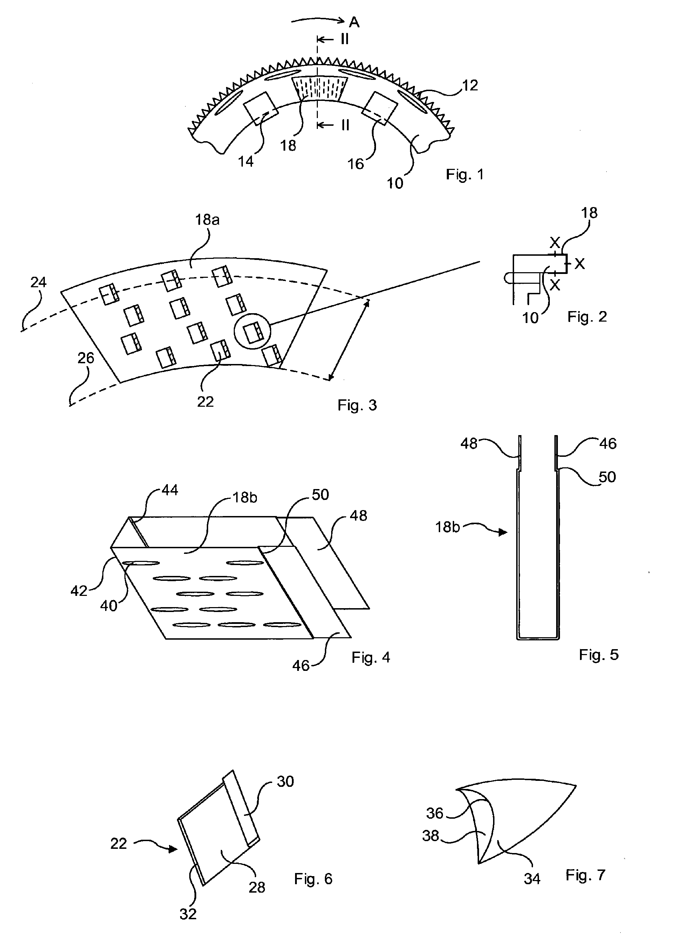

Fig. 1 zeigt einen Ausschnitt einer Bremsscheibe 10, wie sie beispielsweise für den Azimutantrieb einer Windenergieanlage vorgesehen ist. Die Bremsscheibe 10 ist als Ring mit einer im Wesentlichen gleichmäßigen Dicke ausgebildet, der auf seiner Außenseite einen Zahnkranz 12 besitzt. Innenseitig sind Bremseinrichtungen 14 und 16 vorgesehen, die fachsprachlich auch als Bremskaliber bezeichnet werden. Die Bremseinrichtungen 14 und 16 werden hydraulisch betätigt und besitzen jeweils ein Paar von Bremsbelägen, die auf beide Seiten der Bremsscheibe 10 gepresst werden. Zur Reinigung der Bremsbeläge ist ein Reinigungsblech 18 auf die Bremsscheibe 10 montiert, das zwischen den Bremseinrichtungen 14 und 16 zu erkennen ist. In der Regel ist die Bremsscheibe 10 fest mit dem Maschinenhaus (nicht dargestellt) verbunden. Über den Zahnkranz 12 kann ein Azimutantrieb (nicht dargestellt) die Bremsscheibe 10 und damit das Maschinenhaus drehen. Grundsätzlich kann der Antrieb auch an einer anderen Stelle angreifen, so dass der Zahnkranz nicht notwendig an der Bremsscheibe vorgesehen sein muss. Die Bremseinrichtungen 14, 16 sind turmfest angeordnet und können so eine Drehbewegung des Maschinenhauses bremsen.

Wie aus der Schnittzeichnung in Fig. 2 ersichtlich, ist das Reinigungsblech 18 U-förmig um den inneren Rand 20 der Bremsscheibe 10 gelegt. Das Reinigungsblech 18 ist dabei an den mit X gekennzeichneten Positionen mit der Bremsscheibe 10 verschraubt. Die Befestigungsmittel für das Reinigungsblech 18 sind dabei so angeordnet, dass sie nicht mit den Bremsbelägen der Bremseinrichtungen 14 und 16 in Kontakt kommen.

Zum Reinigen der Bremsbeläge der Bremseinrichtung 16 wird das Maschinenhaus, wie aus Fig. 1 ersichtlich, mit seiner Bremsscheibe 10 in die durch den Pfeil A dargestellte Richtung verdreht, so dass das Reinigungsblech 18 durch die Bremseinrichtung 16 hindurch bewegt wird. Das Reinigungsblech 18 gelangt dabei in Kontakt mit den Bremsbelägen (nicht dargestellt) der Bremseinrichtung 16. Die durch den fortwährenden Betrieb der Bremseinrichtung 16 entstehende Schicht aus Abrieb, fachsprachlich auch als Verglasung bezeichnet, wird durch das Reinigungsblech 18 von den Bremsbelägen entfernt. Die Bremseinrichtung 16 wird hierbei nach oder vor der Montage des Reinigungsbleches 18 teilweise gelüftet, so dass das Reinigungsblech 18 sich auf die Bremsbeläge schieben kann und somit die Bremsbeläge einen gewissen Anpressdruck an dem Reinigungsblech 18 besitzen. Durch das Reinigungsblech 18 wird die meistens in Form von Plaques vorliegende Beschichtung von den Bremsbelägen entfernt und die Bremsbeläge somit gereinigt.

Fig. 3 zeigt in einer schematischen Ansicht ein Reinigungsblech 18a, an dem Aussparungen 22 vorgesehen sind. Die gestrichelten Linien 24, 26 deuten hierbei die von den Bremsbelägen überstrichene Fläche an. Bei einer Bewegung des Reinigungsbleches 18a wird das Entfernen der durch Abrieb entstandenen Schicht von den Bremsbelägen durch die Aussparungen 22 unterstützt.

Fig. 6 zeigt eine Detailansicht der Aussparung 22, die eine durchgehende Öffnung 28 und eine Auffaltung 30 bilden. Die Auffaltung 30 bildet einen Vorsprung auf dem Reinigungsblech 18a, der lokal den Anpressdruck zwischen den Bremsbelägen und dem Reinigungsblech 18a erhöht. Hinzu kommt, dass die Kanten 32 der Öffnung 28 eine schabende Wirkung an dem Bremsbelag haben und damit eine Beschichtung, die sich im Laufe der Zeit gebildet hat, von dem Bremsbelag entfernen.

Fig. 7 zeigt eine alternative Ausgestaltung für eine Aussparung auf dem Reinigungsblech, bei der eine Auswölbung 34 auf dem Reinigungsblech vorgesehen ist, die eine gewölbte Kante 36 zum Abtragen einer Beschichtung auf dem Bremsbelag aufweist. Die Wölbung 34 erstreckt sich dabei im Wesentlichen über eine Öffnung 38 in dem Reinigungsblech.

Fig. 4 zeigt in einer perspektivischen Ansicht eine alternative Ausgestaltung eines Reinigungsbleches 18b, das im Wesentlichen mit schlitzförmigen Ausnehmungen 40 versehen ist. Die schlitzförmigen Ausnehmungen 40 erstrecken sich dabei ungefähr in radialer Richtung der Bremsscheibe. Das Reinigungsblech 18b besteht aus einem durchgehenden Blech, das entlang der Knickkanten 42 und 44 U-förmig gebogen ist. An dem nicht durch die Bremseinrichtungen geführten Bereich 46, der am Ende des Reinigungsbleches 18b vorgesehen ist, besitzt das Reinigungsblech einen Versatz 50. Wie in Fig. 5 zu erkennen, springt das Reinigungsblech 18b entlang dem Versatz 50 zurück, so dass das Reinigungsblech 18b in den Bereichen 46 und 48 eine geringere Breite besitzt. Die geringere Breite in den Bereichen 46 und 48 erlaubt es, das Reinigungsblech 18b besser an die Form der Bremsscheibe anzupassen, insbesondere falls diese einen Rücksprung oder eine Stufe aufweist.

Das Reinigungsblech besteht bevorzugt aus Metall und ist beispielsweise vernickelt oder aus Edelstahl hergestellt. Bei gängigen Bremseinrichtungen hat sich eine Dicke des Reinigungsbleches von 0,5 mm bis 1,5 mm, bevorzugt von 0,6 mm bis 0,8 mm als vorteilhaft erwiesen.

## Patentansprüche

1. Verfahren zum Reinigen einer Bremse einer Windenergieanlage, die eine Bremsscheibe (10) und mindestens eine Bremseinrichtung (14, 16) aufweist, wobei die Bremsscheibe (10) und die Bremseinrichtung (14, 16) relativ zueinander über einen Antrieb bewegbar sind, **gekennzeichnet durch** folgende Verfahrensschritte:
- Befestigen eines Reinigungsbleches (18) auf der Bremsscheibe (10),
- Lüften von mindestens einer Bremseinrichtung (14, 16),
- Bewegen (A) der Bremsscheibe (10) und der Bremseinrichtung (14, 16) relativ zueinander, so dass das Reinigungsblech (18) an einem Bremsbelag der Bremseinrichtung (14, 16) anliegend vorbeibewegt wird, und
- Demontieren des Reinigungsbleches (18) von der Bremsscheibe (10).

2. Verfahren nach Anspruch 1, **dadurch gekennzeichnet, dass** vor dem Demontieren des Reinigungsbleches (18) dieses mehrfach an dem Bremsbelag der Bremseinrichtung (14, 16) vorbei bewegt wird.

3. Verfahren nach Anspruch 1 oder 2, **dadurch gekennzeichnet, dass** der Bremsbelag der Bremseinrichtung (14, 16) und das Reinigungsblech (18) unter einem vorbestimmten Anpressdruck aneinander vorbei bewegt werden.

4. Verfahren nach einem der Ansprüche 1 bis 3, **dadurch gekennzeichnet, dass** das Reinigungsblech (18) Ausnehmungen und/oder Vorsprünge aufweist, die bei der Relativbewegung entlang dem Bremsbelag der Bremseinrichtung (14, 16) schaben.

5. Reinigungsblech (18) für eine Bremse einer Windenergieanlage mit einer Bremsscheibe (10) und mindestens einer Bremseinrichtung (14, 16),
**dadurch gekennzeichnet, dass**
das Reinigungsblech (18) Mittel zur Verbindung mit der Bremsscheibe (10) aufweist und eine Dicke besitzt derart, dass das auf der Bremsscheibe (10) befestigte Reinigungsblech (18) durch die Bremseinrichtung unter Anlage an einem Bremsbelag der Bremseinrichtung (14, 16) bewegbar ist.

6. Reinigungsblech (18) nach Anspruch 5, **dadurch gekennzeichnet, dass** eine Vielzahl von Ausnehmungen vorgesehen ist, von denen mindestens eine einen Vorsprung aufweist, der bei der Relativbewegung entlang dem Bremsbelag der Bremseinrichtung (14, 16) schabt.

7. Reinigungsblech (18) nach einem der Ansprüche 5 oder 6, **dadurch gekennzeichnet, dass** entlang einer Kante des Reinigungsbleches (18), die bei einer Relativbewegung zwischen der Bremseinrichtung (14, 16) und dem Reinigungsblech (18) zuerst in die Bremseinrichtung (14, 16) eintritt, eine Abschrägung vorgesehen ist.

8. Reinigungsblech (18) nach einem der Ansprüche 5 bis 7, **dadurch gekennzeichnet, dass** das Reinigungsblech (18) eine U-Form besitzt, deren Schenkel parallel zueinander angeordnet sind.

9. Windenergieanlage mit einer Bremse und einem Reinigungsblech (18) nach einem der Ansprüche 5 bis 8, **dadurch gekennzeichnet, dass** das Reinigungsblech (18) Bohrungen als Mittel zur Befestigung an der Bremsscheibe (10) aufweist.

10. Windenergieanlage nach Anspruch 9, **dadurch gekennzeichnet, dass** das Reinigungsblech (18) im montierten Zustand eng an der Bremsscheibe (10) der Windenergieanlage anliegt und mit dieser durch die Bremseinrichtung (14, 16) geführt wird.

11. Windenergieanlage nach Anspruch 9 oder 10, **dadurch gekennzeichnet, dass** die Bremse eine Azimutbremse ist, die eine Drehbewegung des Maschinenhauses der Windenergieanlage bremst.

## Claims

1. A method for cleaning a brake of a wind turbine, the brake having a brake disk (10) and at least one brake unit (14, 16), wherein the brake disk (10) and the brake unit (14, 16) being configured to be movable relative to one another via a dive, **characterized by** the following method steps:
- fastening a cleaning plate (18) onto the brake disk (10),
- releasing at least one brake unit (14, 16),
- moving (A) the brake disk (10) and the brake unit (14, 16) relative to one another to cause the cleaning plate (18) to move past a brake pad of the brake unit (14, 16), while making applied contact engagement therewith, and
- removing the cleaning plate (18) from the brake disk (10).

2. The method according to claim 1, **characterized in that** before removing the cleaning plate (18), the cleaning plate (18) is moved past the brake pad of the brake unit (14, 16) multiple times.

3. The method according to claim 1 or 2, **characterized in that** the brake pad of the brake unit (14, 16) and the cleaning plate (18) are moved past one another with a predetermined contact pressure.

4. The method according to one of the claims 1 to 3, **characterized in that** the cleaning plate (18) has recesses and/or projections which scrape along the brake pad of the brake unit (14, 16) during the relative movement.

5. A cleaning plate (18) for a brake of a wind turbine, the brake having a brake disk (10) and at least one brake unit (14, 16),
**characterized in that**
the cleaning plate (18) having means for fastening the cleaning plate (18) to the brake disk (10) and having a thickness configured such that the cleaning plate (18) fastened to the brake disk (10) is movable through the brake unit (14, 16) while making applied contact engagement with a brake pad of the brake unit (14, 16).

6. The cleaning plate (18) according to claim 5, **characterized in that** a plurality of recesses is provided, at least one of which has a projection which scrapes along the brake pad of the brake unit (14, 16) during the relative movement.

7. The cleaning plate (18) according to claim 5 or 6, **characterized in that** a bevel is provided along an edge of the cleaning plate (18), said edge configured to enter the brake unit (14, 16) first during a relative movement between the brake unit (14, 16) and the cleaning plate (18).

8. The cleaning plate (18) according to one of the claims 5 to 7, **characterized in that** the cleaning plate (18) having a U-shape, the legs of which are arranged in parallel to each other.

9. A wind turbine having a brake and a cleaning plate (18) according to one of the claims 5 to 8, **characterized in that** the cleaning plate (18) having bores as means for fastening the cleaning plate (18) to the brake disk (10).

10. The wind turbine according to claim 9, **characterized in that** the cleaning plate (18), in the mounted state, is configured to seat tightly on the brake disk (10) of the wind turbine and is guided through the brake unit (14, 16) with the brake disk (10).

11. The wind turbine according to claim 9 or 10, **characterized in that** the brake is an azimuth brake configured to brake a rotational movement of the nacelle of the wind turbine.

## Revendications

1. Procédé de nettoyage d'un frein d'une éolienne, qui a un disque de frein (10) et au moins un dispositif de freinage (14, 16), le disque de frein (10) et le dispositif de freinage (14, 16) étant mobiles l'un par rapport à l'autre via un entraînement, **caractérisé par** les étapes suivantes :
• attacher une tôle de nettoyage (18) sur le disque de frein (10),
• aérer au moins un dispositif de freinage (14, 16),
• remuer (A) le disque de frein (10) et le dispositif de freinage (14, 16) l'un par rapport à l'autre, de sorte que la tôle de nettoyage (18) est passée en appui au-delà d'une garniture de frein du dispositif de freinage (14, 16), et
• démonter la tôle de nettoyage (18) du disque de frein (10).

2. Procédé selon la revendication 1, **caractérisé en ce que** la tôle de freinage (18) est plusieurs fois passée au-delà de la garniture de frein du dispositif de freinage (14, 16) avant son démontage.

3. Procédé selon la revendication 1 ou 2, **caractérisé en ce que** la garniture de frein du dispositif de freinage (14, 16) et la tôle de nettoyage (18) sont passées au-delà de l'une à l'autre sous une pression d'appui prédéterminée.

4. Procédé selon l'une quelconque des revendications 1 à 3, **caractérisé en ce que** la tôle de nettoyage (18) a des évidements et/ou saillies qui frottent le long de la garniture de frein du dispositif de freinage (14, 16) chez le mouvement relatif.

5. Tôle de nettoyage (18) pour un frein d'une éolienne, avec un disque de frein (10) et au moins un dispositif de freinage (14, 16),
**caractérisé en ce que**
la tôle de nettoyage (18) comporte des moyens de connexion avec le disque de frein (10) et a une épaisseur de sorte que la tôle de nettoyage (18) fixée sur le disque de frein (10) est mobile en appui contre une garniture de frein du dispositif de freinage (14, 16).

6. Tôle de nettoyage (18) selon la revendication 5, **caractérisé en ce que** une pluralité d'évidements est pourvue, dont au moins un comporte une saillie qui frotte le long de la garniture de frein du dispositif de freinage (14, 16) chez le mouvement relatif.

7. Tôle de nettoyage (18) selon une des revendications 5 ou 6, **caractérisé en ce que** un chanfrein est pourvu le long d'un rebord de la tôle de nettoyage (18) qui entre en premier dans le dispositif de freinage (14, 16) chez un mouvement relatif entre le dispositif de freinage (14, 16) et la tôle de nettoyage (18).

8. Tôle de nettoyage (18) selon une quelconque des revendications 5 à 7, **caractérisé en ce que** la tôle de nettoyage (18) est en forme d'U, dont les côtés sont arrangés en parallèle l'un à l'autre.

9. Éolienne avec un frein et une tôle de nettoyage (18) selon une quelconque des revendications 5 à 8, **caractérisé en ce que** la tôle de nettoyage (18) a des perçages comme des moyens pour la fixation sur le disque de frein (10).

10. Éolienne selon la revendication 9, **caractérisé en ce que** dans la condition montée, la tôle de nettoyage (18) fait appui contre le disque de frein (10) de l'éolienne, et est guidée avec celui-ci à travers le dispositif de freinage (14, 16).

11. Éolienne selon la revendication 9 ou 10, **caractérisé en ce que** le frein est un frein d'azimut qui freine un mouvement rotatoire de la nacelle de l'éolienne.
